# EUROPEAN PATENT APPLICATION

(11) **EP 4 814 746 A1**
(43) Date of publication of application: **30.09.2026**
(21) Application number: 26166816.4
(22) Date of filing: 23.03.2026
(51) Int. Cl.: G06F 16/3329

(54) **TWO-STAGE CROSS-ENCODER ARCHITECTURE FOR TEXT RETRIEVAL SYSTEMS**

(30) Priority: 26.03.2025 US 202519091366
(71) Applicant: Intuit Inc., Mountain View, CA 94043 (US)
(72) Inventor: BALAKRISHNAN, Jeyendran, Mountain View, 94043 (US); KUMAR, Sricharan Kallur Palli, Mountain View, 94043 (US)
(74) Representative: D Young & Co LLP

(57) **Abstract**

Aspects of the present disclosure relate to a two-stage architecture for cross-encoder models that allows for improved text retrieval. The two-stage architecture may involve a baseline cross-encoder that generates baseline joint embedding representations and similarity scores for query-text pairs. Then, a kernel interpolation cross-encoder model may be used to augment the baseline similarity scores based on kernels that are placed according to a location in an embedding space that corresponds to a training example used to build the kernel interpolation cross-encoder model. The level of augmentation of a similarity score for an input query-text pair may thus be based on the location of a joint embedding representation of the query-text pair relative to a location of the training example in the embedding space.

## Description

### INTRODUCTION

Aspects of the present disclosure relate to techniques for automated text retrieval. In particular, techniques described herein involve a two-stage cross-encoder architecture that yields improved results for retrieving texts based on queries.

### BACKGROUND

Every year millions of people, businesses, and organizations around the world use automated text retrieval systems. For example, an individual may submit a query to a text retrieval system (e.g., a search engine) to obtain texts that are relevant to the query. Text retrieval systems may also be integrated into other systems, such as machine learning-based systems. For instance, a text retrieval system may be used to retrieve text, and the retrieved text may be provided as context to help a language processing machine learning model generate a more robust output (e.g., through a process known as retrieval augmented generation).

Modern text retrieval systems may use machine learning technologies such as embedding models, which capture the semantic meaning of input texts by generating representations of the texts in a vector space. One type of embedding system architecture is a cross-encoder, or re-ranker. Cross-encoders create joint embedding representations of the query and each of the texts to which the query is compared. Then, based on the joint embedding, a similarity score is generated for each query-text pair. Cross-encoders are generally more accurate than other text retrieval technologies known in the art, such as bi-encoders, which create separate embedding representations of queries and texts.

However, there are several technical challenges associated with using cross-encoders. For instance, cross-encoders that are pre-trained for general use may not be suitable for some applications. As an example, a cross-encoder model that is trained to retrieve texts that provide answers to a question may not be optimal for retrieving other questions that are similar to the question. To tailor a cross-encoder to a specific application, the cross encoder may be retrained. However, generating new training data and retraining a cross-encoder may require a significant amount of time, manual labor, and computing resources. Furthermore, in some instances, there may be insufficient data to retrain a cross-encoder for a given application.

Thus, there is a need in the art for improved techniques of automated text-retrieval using cross-encoders.

### BRIEF SUMMARY

Particular aspects are set out in the appended independent claims. Various optional embodiments are set out in the dependent claims. Certain embodiments provide a method of embedding-based text retrieval. The method generally includes: retrieving, based on a query, a corpus comprising a set of texts; generating, for each respective query-text pair, a respective baseline joint embedding and a respective baseline similarity score based on providing each respective query-text pair as input to a baseline cross-encoder; and generating, for each respective query-text pair, a respective augmented similarity score based on providing each respective baseline joint embedding and each respective baseline similarity score as input to a kernel interpolation cross encoder model comprising a kernel function having a location in an embedding vector space that is associated with an embedding representation of a training example.

Other embodiments provide a method of building a cross-encoder model to perform embedding-based text retrieval. The method generally includes: forming a kernel, wherein the kernel has a particular location based on a location in an embedding space corresponding to a joint embedding of a given ground truth example; forming an interpolation function based on the kernel; and incorporating the interpolation function into a cross-encoder model.

Other embodiments provide processing systems configured to perform the aforementioned methods as well as those described herein; non-transitory, computer-readable media comprising instructions that, when executed by one or more processors of a processing system, cause the processing system to perform the aforementioned methods as well as those described herein; a computer program product embodied on a computer readable storage medium comprising code for performing the aforementioned methods as well as those further described herein; and a processing system comprising means for performing the aforementioned methods as well as those further described herein.

The following description and the related drawings set forth in detail certain illustrative features of one or more embodiments.

### BRIEF DESCRIPTION OF THE DRAWINGS

The appended figures depict certain aspects of the one or more embodiments and are therefore not to be considered limiting of the scope of this disclosure.
**FIG. 1** depicts an example of computing components related to embedding-based text retrieval.
**FIG. 2** depicts an additional example of computing components related to embedding-based text retrieval.
**FIG. 3** depicts an additional example of computing components related to embedding-based text retrieval.
**FIG. 4** depicts an additional example of computing components related to embedding-based text retrieval.
**FIG. 5** depicts example operations related to embedding-based text retrieval.
**FIG. 6** depicts additional example operations related to embedding-based text retrieval.
**FIG. 7** depicts an example of a processing system for embedding-based text retrieval.

To facilitate understanding, identical reference numerals have been used, where possible, to designate identical elements that are common to the drawings. It is contemplated that elements and features of one embodiment may be beneficially incorporated in other embodiments without further recitation.

### DETAILED DESCRIPTION

Aspects of the present disclosure provide apparatuses, methods, processing systems, and computer-readable mediums for embedding-based text retrieval.

Existing pre-trained general purpose cross-encoders suffer from an inability to be optimized for a specific text retrieval problem of interest. When some task-specific "training" information is available in the form of matching query-text pairs, existing techniques involving pre-trained general purpose cross-encoders are unable to leverage such information to improve retrieval performance. According to certain embodiments of the present disclosure, to address this problem, kernel interpolation cross-encoder model may be built by adding kernel functions to a cross-encoder architecture. Each kernel function may share a location in an embedding space with a joint embedding associated with a training example. The training example may include a joint embedding representation of a ground truth query-text pair (e.g., the ground truth query-text pair may be a query paired with the text that is a known best match for the query). As a result, similarity scores for joint embedding representations of query-text pairs that are similar to the training examples (e.g., closer to the joint embedding representations of the training examples in the embedding space) may be augmented by the kernel interpolation cross-encoder model. By contrast, similarity scores for joint embedding representations of query-text pairs that are not similar to the training examples (e.g., further away from the training examples in the embedding space) may not be augmented by the kernel interpolation cross-encoder model. In other words, the level of augmentation of a similarity score for a query-text pair provided to the kernel interpolation cross-encoder model may generally have an inverse relationship with the distance of the query-text pair from a training example in the embedding space. Thus, the cross-encoder fine-tuned based on kernel functions as described herein may produce results with improved accuracy for a particular domain as compared to a general purpose cross-encoder without requiring generation of extensive training data relating to that particular domain (e.g., because the kernel interpolation cross-encoder model augments similarity scores for query-text pairs that are similar to training examples and does not augment similarity scores for query-text pairs that are not similar to the training examples).

In some embodiments, a kernel interpolation cross-encoder model as described herein is integrated into a document retrieval system. A bi-encoder (or other text retrieval technologies as known in the art) may be used to retrieve a set of corpus texts that are potential matches for a given query. Query-text pairs may then be provided to a baseline cross-encoder (e.g., a pre-trained cross-encoder model). Each query-text pair may comprise the query and a respective text from the corpus that is a candidate match for the query. At the first stage of the cross-encoder architecture, a baseline cross-encoder may generate a joint embedding representation and a similarity score for each query-text pair. At the second stage of the cross-encoder architecture, an input based on the query-text pairs (e.g., the joint embedding representation and similarity score for a pair) may be provided to the kernel interpolation cross-encoder model. The kernel interpolation cross-encoder model may then augment the similarity scores based on the similarity of the query-text pairs to the training examples. Then, one or more actions may be performed based on the augmented similarity scores. One such action could be providing a text that corresponds to the highest similarity score as a response to the query. Other actions could be ranking the texts in descending order of the augmented similarity scores and providing the *k* top-ranked texts, where *k* is a user-provided positive integer input

Embodiments of the present disclosure provide numerous technical and practical effects and benefits. Namely, building a kernel interpolation cross-encoder model by placing kernels at locations in an embedding space that correspond to training examples allows for dynamically improving the performance of an embedding-based retrieval system. For example, the performance of such an embedding-based system will improve for queries that are similar to the training examples, and the performance will remain the same for queries that are not similar to the training examples (by contrast, for techniques that involve retraining a model based on training examples, performance may decrease for queries that are not similar to the training examples). Furthermore, the degree of performance improvement scales as more training examples and corresponding kernels are added. For instance, as the number of kernels increases, the likelihood that an input query will be near a kernel in the embedding space increases. Thus, the likelihood that a similarity score will be augmented for improved accuracy based on the training examples using techniques described herein increases. Accordingly, techniques described herein produce a cross-encoder that has a higher level of accuracy for a particular domain than a general purpose cross-encoder without requiring the generation of extensive amounts of training data for that domain. Aspects of the present disclosure provide a text retrieval system that retains the baseline performance of a pre-trained cross-encoder when no training examples are available, and smoothly and gradually improves task-specific performance with increase in the number and variety of task-specific training examples.

### Example of Computing Components Related to Embedding-based Text Retrieval

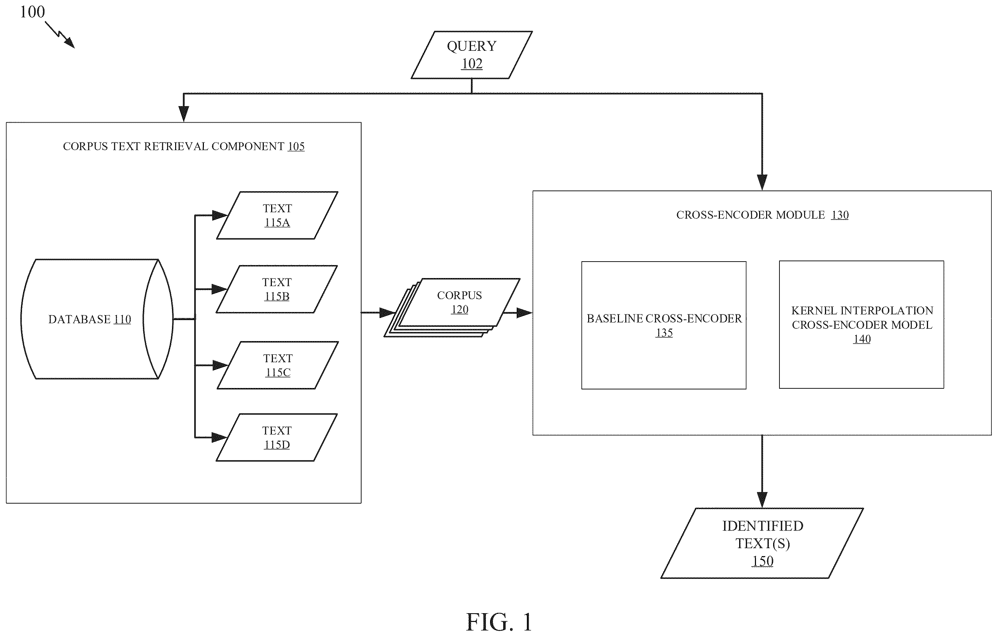

**FIG. 1** depicts an example of computing components related to embedding-based text retrieval.

A query 102 may be submitted to a retrieval system 100 to retrieve a text. As shown in **FIG. 1****,** the text retrieval system includes a corpus text retrieval component 105 and a cross-encoder module 130. The corpus text retrieval component 105 may be used to retrieve a corpus 120 of texts. The corpus 120 may be provided to the cross-encoder module 130, which may identify a text based on the query 102 (e.g., the identified text 150 may be the text that is most relevant/similar to the query 102, provides an answer to the query 102, and/or the like).

As shown in **FIG. 1****,** the corpus text retrieval component 105 retrieves multiple texts 115A-D from a database 110 (more or fewer texts 115 may be retrieved). The corpus text retrieval component 105 may be implemented on one or more processors, and may use one or more text retrieval techniques as known in the art. For example, the corpus text retrieval component 105 may use a search algorithm such as Term Frequency-Inverse Document Frequency (TF-IDF) or BM25 to retrieve the texts 115. As another example, the corpus text retrieval component 105 may comprise a bi-encoder model that creates an embedding representation of the query 102. The embedding representation of the query 102 may be compared to embedding representations of texts 115 stored in the database 110 using a semantic similarity algorithm (e.g., cosine similarity, a nearest-neighbor algorithm, and/or the like). The texts 115 that are most similar to the query 102 may be included in the corpus 120.

The cross-encoder module 130 may comprise a baseline cross-encoder 135 and a kernel interpolation cross-encoder model 140. The baseline cross-encoder 135 may be any type of cross-encoder model that is trained on a broad dataset. For example, the baseline cross-encoder 135 may be a pre-trained cross-encoder model. The baseline cross-encoder 135 may generate a baseline joint embedding and similarity score for each query-corpus text pair. Then, the baseline joint embeddings and the baseline similarity scores may be provided to the kernel interpolation cross-encoder model 140.

Combining bi-encoders and cross-encoders together in a text retrieval system leads to numerous technical and practical benefits. As mentioned above, the bi-encoder architecture creates embedding vector representations of a query and a text separately and then uses a semantic similarity algorithm to determine the similarity between the text and the query. The cross-encoder, or re-ranker, architecture creates joint embedding representations of the query and each of the texts to which the query is compared. Then, based on the joint embedding, a similarity score is generated for each query-text pair. Cross-encoders are generally more accurate than bi-encoders and other text retrieval techniques known in the art. However, with cross-encoders, embedding representations must be created for each of the text-query pairs to be compared. Thus, cross-encoders may require more resources than bi-encoders to compare the same amount of texts to a query. Thus, bi-encoders (or other less resource intensive text retrieval techniques as known in the art) may be used to narrow a set of candidate texts before a cross-encoder is used to determine which text of the narrowed set is the best match for the query. Then, the more accurate cross-encoders may be used to identify a text that is a match for the query. This approach allows for maintaining the accuracy of cross-encoder-based search while using significantly fewer resources and completing a search significantly quicker.

As used herein, embeddings generally refer to vector representations of an entity that represent the entity as a vector in n-dimensional space such that similar entities are represented by vectors that are close to one another in the n-dimensional space. Embeddings may be generated using an embedding model in some embodiments, such as a bi-encoder or a cross-encoder. The embedding model may comprise a neural network or other type of machine learning model that learns a representation (embedding) for an entity through a training process that trains the neural network based on a data set, such as a plurality of features of a plurality of entities. In one example, the embedding model comprises a Bidirectional Encoder Representations from Transformer (BERT) model, which involves the use of masked language modeling to determine embeddings. In a particular example, the embedding model comprises a Sentence-BERT model. In other embodiments, the embedding model may involve embedding techniques such as Jena AI, Word2Vec, and GloVe embeddings. These are included as examples, and other techniques for generating embedding representations of entities are possible.

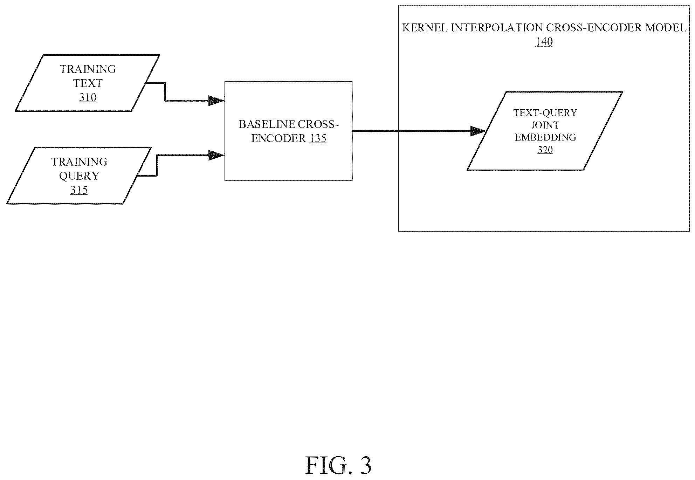

The kernel interpolation cross-encoder model 140, as described in further detail below with respect to **FIG. 3****,** may be constructed by placing kernels at locations in an embedding space that correspond to training examples. Thus, similarity scores for joint embeddings that are similar to the training examples may be augmented based on the training examples. By contrast, similarity scores for joint embeddings that are not similar to the training examples may not be augmented based on the training examples. In general, as the similarity of a query-text pair to a training example increases, the level of augmentation for the similarity scores increases. Likewise, as the similarity of a query-text pair to a training example decreases, the level of augmentation for the similarity scores decreases.

Based on the outputs of the kernel interpolation cross-encoder model 140, one or more texts may be identified for the query 102. The identified text(s) 150 may be texts with the highest similarity scores of the corpus 120 (e.g., texts with scores above a threshold may be identified for the query 120, or the N texts with the highest similarity scores may be identified). One or more actions may be taken based on the identified text(s) 150, such as providing the texts as a response to a user, or providing a prompt based on the texts to a language processing machine learning model.

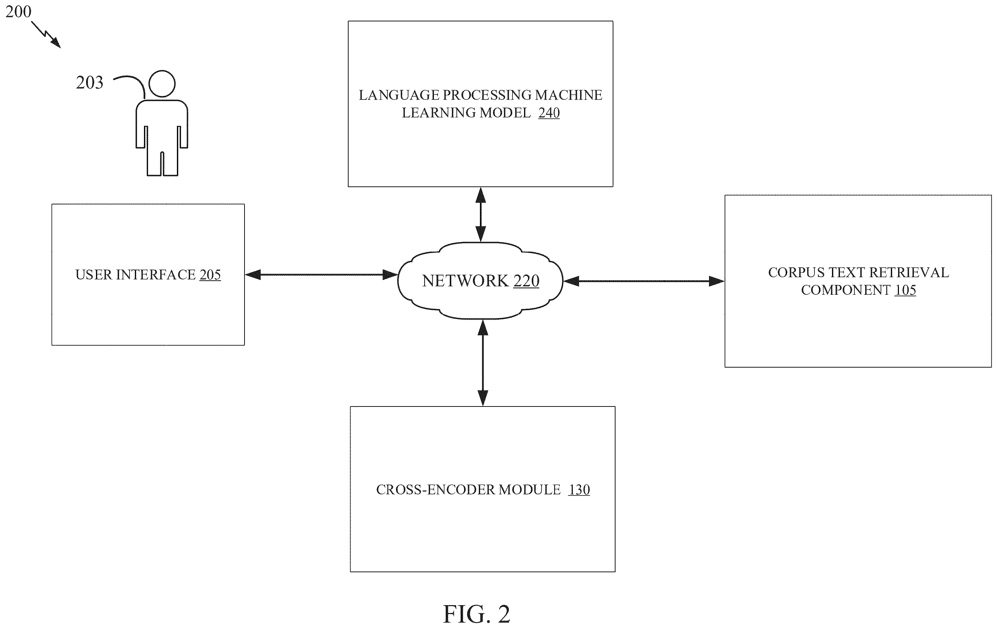

**FIG. 2** depicts an additional example of computing components related to embedding-based text retrieval.

A user 203 may interact with a computing environment 200 via a user interface 205 associated with a computing device. The computing environment may, for example, comprise a software application. The software application may use cross-encoder module 130 and corpus text retrieval component 105 to retrieve texts based on inputs provided by the user 203. For example, as described above with respect to **FIG. 1****,** corpus text retrieval component 105 may retrieve a corpus of texts that are then provided to cross-encoder module 130, which is used to select texts from the corpus. The selected texts (and/or an output based on the selected texts) may then be provided to the user 203 via the user interface 205.

In some embodiments, the computing environment 200 further comprises a language processing machine learning model 240 (e.g., a Large Language Model, or LLM) that is configured to generate outputs based on the selected texts. For example, a prompt may be generated based on the selected texts and provided as input to the language processing machine learning model 240, which may generate an output that is provided to the user 203 via the user interface 205.

In some embodiments, the selected texts may be used as relevant context data to provide along with a query to language processing machine learning model 240 through a process known as retrieval augmented generation (RAG). In a typical RAG process, a user submits a query, the relevant context is retrieved based on the query, and then the query and the context are provided as part of a prompt to a language processing machine learning model, which then generates a response to the query. Texts selected by the cross-encoder module 130 according to embodiments disclosed herein may be used as the relevant context in a RAG process. In other words, the corpus text retrieval component 105 and the cross-encoder module 130 may be used to perform the context retrieval in a RAG process.

The software application associated with the user interface 205, the cross-encoder module 130, the corpus text retrieval component 105, and language processing machine learning model 240 may interact over network 220. Network 220 may be any connection over which data may be transmitted. In one example, network 140 is the Internet.

**FIG. 3** depicts an additional example of computing components related to embedding-based text retrieval. In particular, **FIG. 3** depicts functionality that may be used to build a kernel interpolation cross-encoder model.

Training data for training/fine-tuning a cross-encoder may include multiple query-text pairs. Each query-text pair may comprise a training text 310 and a training query 315. Each query-text pair represented in the training data may be optimal matches (e.g., an optimal match may be a text that is a best match of a set of texts for a given query). In certain embodiments, training data includes negative examples comprising query-text pairs that are not matches. Query-text pairs included in the training examples may be specific to a particular domain and/or task. As a result, the training examples may allow for constructing a model that is tailored to the specific task/domain.

The baseline cross-encoder 135, which may comprise a pre-trained cross-encoder model, may be used to generate a joint embedding representation of the training text 310-training query 315 pair. The text-query joint-embedding 320 may also be generated by another model, and/or modified for enhanced accuracy. The text-query joint embedding 320 may represent a joint embedding of a ground truth training text 310-training query 315 pair (e.g., the training text 310 may be a known best match for the training query 315). A ground truth similarity score may be assigned to the training text 310-training query 315 pair (e.g., a normalized score of 1 for ground truth examples, or a normalized score of 0 for negative examples).

The text-query joint embedding 320 may be used to construct a kernel interpolation cross-encoder model 140. The kernel interpolation cross-encoder model 140 may be constructed by adding an interpolation function that augments similarity scores for joint embeddings that are provided as input to the kernel interpolation cross-encoder model 140. When the joint embeddings and scores are provided to the interpolation function, the input scores may be augmented based on the distance between the input embeddings and embeddings of the training examples in an embedding space. Thus, when provided as input to the kernel interpolation cross-encoder model 140, similarity scores for joint embeddings that are similar to the training examples may be augmented based on the training examples (e.g., for an input query-text pair, the similarity score for the input query-text pair may approach a maximum value as the similarity of the input query-text pair to a training example increases). By contrast, similarity scores for joint embeddings that are not similar to the training examples may not be augmented based on the training examples. In general, as the similarity of a query-text pair to a training example increases, the level of augmentation for the similarity scores for that query-text pair increases. Likewise, as the similarity of a query-text pair to a training example decreases, the level of augmentation for the similarity scores decreases.

The kernel interpolation cross-encoder model 140 may use various types of interpolation functions and parameters to achieve the above parameters. For example, in some embodiments, the interpolation function may use smooth localized kernel functions that are centered at the locations of joint embeddings of text-query pairs in the training data. The parameters *θ* of the kernel interpolation cross-encoder model 140, for example, may be the joint embedding vectors 320 of the training queries 315 and corresponding training texts 310, as well as the smoothness scale parameter of the localized kernel functions. In some implementations, the kernel functions may include a threshold parameter to limit the degree of separation between an input joint embedding and a training joint embedding before the augmented input embedding will be the input joint embedding, In some implementations, the interpolation function may use a multivariate Gaussian process, where the parameters of the kernel interpolation cross-encoder model 140 may be the embedding vectors of the training queries and corresponding training texts, a row correlation matrix that captures the correlation between different components of the query embedding vectors, a scale parameter of the localized kernel functions, and an additive noise variance parameter.

In some embodiments, the interpolation operation of the kernel interpolation cross-encoder model 140 may be described by a family of parameterizable kernels with parameters that are trained on the labeled training data set. The parametrized kernel generally denoted as **K**(s; *θ*), maps a non-negative real number s to another non-negative real number **K**(s; *σ*), where the parameter *σ* is a scale parameter. The kernel function used in the kernel interpolation cross-encoder model 140 may be configured so that as the distance s between an input joint embedding and a joint embedding of a training example decreases, the augmented similarity score for the input joint embedding will be closer to the similarity score for the joint embedding of the training example, as discussed above. For example, the kernel function used in the kernel interpolation cross-encoder model 140 may be configured so that for an exact match between an input joint embedding and a joint embedding of a training example, the resulting augmented similarity score is the similarity score for the joint embedding of a training example, and as the distance between the input joint embedding and a joint embedding of a training example approaches infinity, the augmented similarity score will approach the similarity score generated by the baseline cross-encoder. The kernel function used in the kernel interpolation cross-encoder model 140, for example, may have the characteristic for all σ > 0, **K**(0; σ) = 1, and ${lim}_{r \to ∞} \left(r; σ\right) = 0$, and further, its derivative with respect to r satisfies **K**(r; σ) > 0 for r > 0. Example embodiments of such kernel functions are $K \left(r; σ\right) = {e}^{- \frac{{r}^{2}}{σ}}$ and $K \left(r; σ\right) = \frac{σ}{σ + {r}^{2}}$.

The parameters of the kernel interpolation cross-encoder model 140 may include: a set of N > 0 M dimensional kernel center vector locations cᵢ and corresponding M dimensional scalar values vᵢ, an integer k ∈ {1, 2, ... N} denoting a desired number of nearest neighbor locations, and the scaling parameter *σ*. Thus, the parameters of the kernel interpolation cross-encoder model 140 may be denoted as:
$θ = \left\{\left({c}_{i}, {v}_{i}\right):i=1, 2, …N; k; σ\right\} .$

For an input comprising a query (q) and a text (d), the output of the kernel interpolation cross-encoder model 140 may be denoted as
$y \left(q, d; θ\right) = s \left(q, d\right) + V \left(θ\right) W \left(q, d; θ\right) u \left(q, d; θ\right)$ where:
$V \left(θ\right) = {\left[{v}_{i}\right]}_{i} ∈ {z}_{\left(q, d; k\right)}$ is a k-dimensional row vector of values in {vᵢ} corresponding to kernel centers cᵢ in the k-nearest neighbor index set of (q, d);

Z(q, d; k) is an index of the k nearest kernel centers chosen from the set of kernel centers { cᵢ } that are closest to the joint embedding vector e(q, d) provided by the baseline cross-encoder 135 based on an input query-text pair (q, d);
$u \left(q, d; θ\right) = {\left[{u}_{i}\left(q, d; θ\right)\right]}_{i} ∈ {z}_{\left(q, d; k\right)} ,$ where uᵢ(qᵢ, dᵢ; *θ*) = **K**(∥e(q, d) - cᵢ∥; σ), a k-dimensional column vector of kernel location weights contributed by each kernel center cᵢ in the k-nearest neighbor index set of (q, d) at the point (q, d); and

W(q, d; *θ*) is a k x k matrix that may represent kernel location weights. In certain embodiments, W(q, d; *θ*) is determined/trained offline and may thus be constant

According to some embodiments, the kernel location weights may be calculated as follows:
$W \left(q, d; θ\right) = \frac{{\left‖u\left(q, d, θ\right)\right‖}_{∞}}{{\left‖u\left(q, d, θ\right)\right‖}_{1}} {I}_{k \times k}$ where ∥u∥₁ is the l₁ norm of vector u (i.e, sum of absolute values of vector elements), ∥u∥_{∞} is the l_{∞} norm of vector u (i.e., maximum of absolute values of vector elements), and I_{k x k} is the k x k identity matrix. This kernel location weight matrix (referred to as a scalar interpolation score transformation matrix) produces a pure interpolation model when k = 1 and a smoothing model when k> 1.

Certain embodiments provide that the kernel location weights may be calculated as follows:
$W \left(q, d; θ\right) = U {\left(q, d; θ\right)}^{- 1} ,$ where U(q, d; *θ*) = [uᵢⱼ(*θ*)]_{i,j} ∈_{Z(q, d; k)} is a symmetric k x k matrix of mutual kernel location weights given by: uᵢⱼ(*θ*) = **K**(∥cᵢ - cⱼ∥; σ). The mutual kernel location weights are the values of the kernel function contributed by each center cᵢ in the k-nearest neighbor index set of (q, d) at each other center cⱼ, including itself. Producing the kernel location weight matrix according to this technique yields an interpolation model for all positive integer choices of k. Because the nearest neighbor set of a query-text pair (q, d) is only known at query time (e.g., when the query is submitted to the retrieval system), the kernel location weights must be determined at query time (as opposed to offline) when this technique for determining the kernel location weights is used. Kernel location weight matrices produced according to this technique may be referred to as matrix interpolation score transformation matrices.

In some embodiments, the kernel location weights may be calculated as follows:
$W \left(q, d; θ\right) = U {\left(q, d; θ\right)}^{- 1} ,$ where U(q, d; *θ*) = [uᵢⱼ(*θ*)] _{i,j = 1, 2, ...N}, a symmetric N x N matrix of mutual kernel location weights given by: uᵢⱼ(*θ*) = **K**(∥cᵢ - cⱼ∥; σ). The mutual kernel location weights are the values of the kernel function contributed by each available center cᵢ at each other center cⱼ, including itself. Thus, when the kernel location weights are determined according to this technique, the matrix may be calculated independently of (q, d), which allows for determining the matrix before query time. A kernel location weight matrix determined according to this technique may be referred to as a Gaussian process score transformation matrix. The Gaussian process score transformation matrix is similar to the matrix interpolation score transformation matrix, except the k-nearest neighbor set is replaced by the entire set of N centers. These techniques for calculating the kernel location weight matrices are provided as examples, and other techniques may be used.

In certain embodiments, cross validation or other supervised learning techniques as known in the art may be used to optimize one or more parameters of the kernel interpolation cross-encoder model 140, such as σ and k. For example, joint embeddings may be generated for an entire training data set. Kernel center locations cⱼ and corresponding scalar values vⱼ may be chosen for the kernel interpolation cross-encoder model 140. Then, using the kernel interpolation cross-encoder model 140 with the chosen values for cⱼ and vⱼ, similarity scores may be generated for each query-text pair in a testing fold for various combinations of values for σ and k. The candidate values for σ and k that result in similarity scores that are closest to ground truth similarity scores for the examples in the testing fold (e.g., values that minimize a variance with respect to the ground truth) may be chosen as the optimized values for σ and k.

Supervised learning techniques generally involve providing training inputs to a machine learning model. The machine learning model processes the training inputs and outputs predictions based on the training inputs. The predictions are compared to known labels associated with the training inputs to determine the accuracy of the machine learning model, and parameters of the machine learning model are iteratively adjusted until one or more conditions are met. For instance, the one or more conditions may relate to an objective function (e.g., a cost function or loss function) for optimizing one or more variables (e.g., model accuracy). In some embodiments, the conditions may relate to whether the predictions produced by the machine learning model based on the training inputs match the known labels associated with the training inputs or whether a measure of error between training iterations is not decreasing or not decreasing more than a threshold amount. The conditions may also include whether a training iteration limit has been reached. Model parameters adjusted during training may include, for example, hyperparameters, values related to numbers of iterations, weights, functions used by nodes to calculate scores, level of randomness, and/or the like. In some embodiments, validation and testing are also performed for a machine learning model, such as based on validation data and test data, as is known in the art.

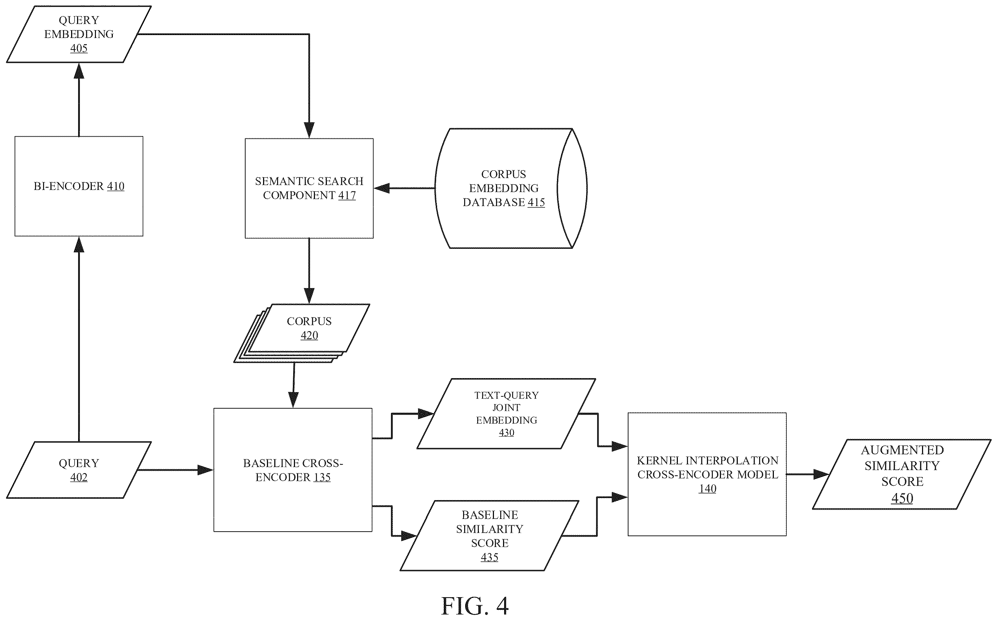

**FIG. 4** depicts an additional example of computing components related to embedding-based text retrieval. In particular, **FIG. 4** depicts functionality involving using a kernel interpolation cross-encoder model to retrieve documents related to a query.

A query 402 may be provided to a bi-encoder 410. The bi-encoder 410 may create a query embedding 405 (i.e., an embedding representation of the query 402). A semantic search component 417 may use the query embedding 405 to retrieve a corpus 420 of text from a corpus embedding database 415. For example, the semantic search component 417 may use a semantic similarity algorithm (e.g., cosine similarity) to compare the query embedding 405 to embedding representations of texts stored in the corpus embedding database 415. The texts that are most similar to the query 402 may be selected for inclusion in the corpus. Although the example shown in **FIG. 4** uses a bi-encoder 410 to build the corpus 420, other techniques for identifying corpus texts may be used (e.g., a search algorithm such as TF-IDF).

The query 405 and the corpus 420 may be provided as input to the baseline cross-encoder 135, which may generate a text-query joint embedding 430 and a baseline similarity score 435 for each query-corpus text pair. Then, the text-query joint embeddings 430 and baseline similarity scores 435 for each query-corpus text pair may be provided to the kernel interpolation cross-encoder model 140. For each pair of text-query joint embeddings 430 and baseline similarity scores 435, the kernel interpolation cross-encoder model 140 may produce an augmented similarity score 450. The baseline similarity score 435 may be augmented based on the distance in the embedding space between the text-query joint embedding 430 and an embedding representation of a training example used to build the kernel interpolation cross-encoder model 140 (e.g., according to the interpolation function described above with respect to **FIG. 3**). If the text-query joint embedding 430 is identical to an embedding in the training data, the similarity score for the training example may be used as the augmented similarity score.

In certain embodiments, the kernel interpolation cross-encoder model is implemented as a separate component from other models (such as the baseline cross-encoder). In some embodiments, the interpolation function is incorporated into a cross-encoder to implement the kernel interpolation cross-encoder model. For example, the interpolation function may be an output layer of a neural network that is part of the cross-encoder. As used herein, the phrase "kernel interpolation cross-encoder model" or "kernel interpolation cross-encoder" may refer to the interpolation function. For instance, the kernel interpolation cross-encoder model model may be an output layer that is added to the baseline cross-encoder.

One or more actions may be performed based on the augmented similarity scores 450, such as identifying a text as a relevant text for the query 402. For example, the text with the highest augmented similarity score 450 may be returned based on the query 402. As another example, the texts in the corpus 420 may be ranked based on the augmented similarity scores 450. Decisions may be made and/or outputs may be generated based on the augmented similarity scores 450 and/or the scores of corpus texts.

### Example Operations Related to Embedding-based Text Retrieval

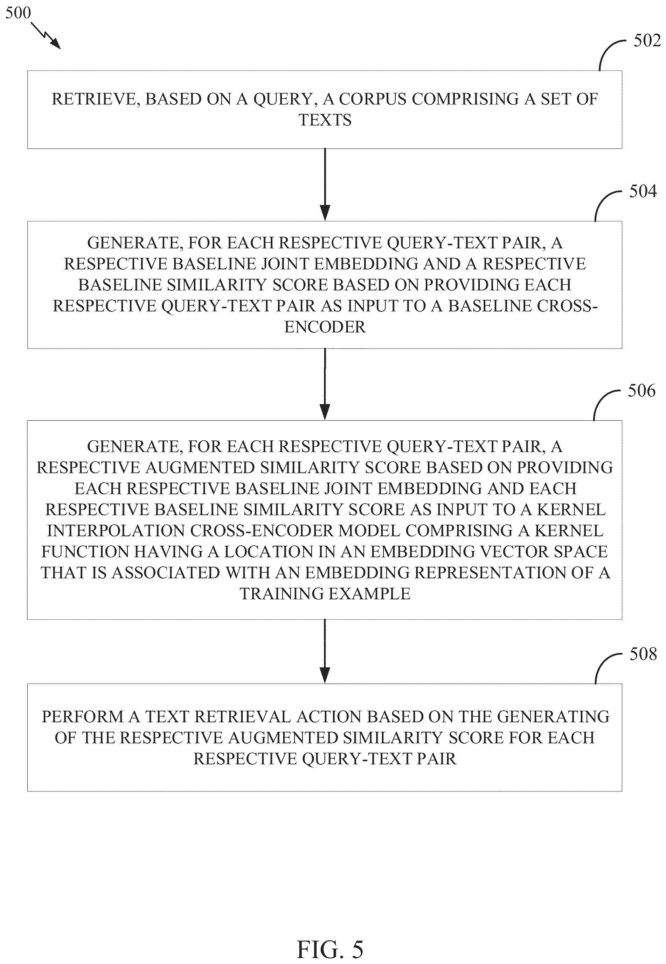

**FIG. 5** depicts example operations 500 related to embedding-based text retrieval. For example, operations 500 may be performed by one or more of the components described with respect to **FIG. 1****,** **FIG. 2****,** **FIG. 3****,** and **FIG. 4****.**

Operations 500 begin at step 502 with retrieving, based on a query, a corpus comprising a set of texts. In some embodiments, retrieving the corpus is based on generating an embedding representation of the query and using a semantic similarity algorithm to identify the corpus based on embedding representations of each of a given set of texts, wherein the given set of texts comprises a larger number of texts than a number of texts included in the corpus.

Operations 500 continue at step 504 with generating, for each respective query-text pair, a respective baseline joint embedding and a respective baseline similarity score based on providing each respective query-text pair as input to a baseline cross-encoder.

Operations 500 continue at step 506 with generating, for each respective query-text pair, a respective augmented similarity score based on providing each respective baseline joint embedding and each respective baseline similarity score as input to a kernel interpolation cross-encoder model comprising a kernel function having a location in an embedding vector space that is associated with an embedding representation of a training example. In certain embodiments, based on the kernel function, a level of augmentation of a similarity score for a particular query-text pair increases as a distance in the embedding vector space between an embedding representation of the particular query-text pair and the embedding representation of the training example decreases. According to some embodiments, based on the kernel function, a level of augmentation of a similarity score for a particular query-text pair decreases as a distance in the embedding vector space between an embedding representation of the particular query-text pair and the embedding representation of the training example increases. In certain embodiments, a size associated with the kernel function is based on a scaling parameter learned through a supervised learning process. Some embodiments provide that the kernel interpolation cross-encoder model further comprises a kernel function for each of a plurality of training examples, wherein each kernel function has a respective location in an embedding vector space that is associated with an embedding representation of a respective training example of the plurality of training examples.

Operations 500 continue at step 508 with performing a text retrieval action based on the generating of the respective augmented similarity score for each respective query-text pair. The text retrieval action may comprise providing the text corresponding to the query-text pair with the highest similarity score to a user or a generative machine learning model in response to the query, and/or similar actions. In some embodiments, the performing of the text retrieval action comprises selecting a given text from the set of texts based on the respective augmented similarity score for the respective query-text pair that includes the given text exceeding augmented similarity scores associated with other texts of the set of texts.

According to some embodiments, a given text from the set of texts may be selected based on an augmented similarity score of the given text exceeding augmented similarity scores associated with other texts from the set of texts. In certain embodiments, an input may be provided to a language processing machine learning model based on the query and the given text and an output may be received from the language processing machine learning model based on the input.

In certain embodiments, the kernel interpolation cross-encoder model is configured to identify a given text as a match for a given query when a joint embedding representation of the given query and a particular text is within a threshold distance of a joint embedding representation of a particular query and the given text in the embedding vector space.

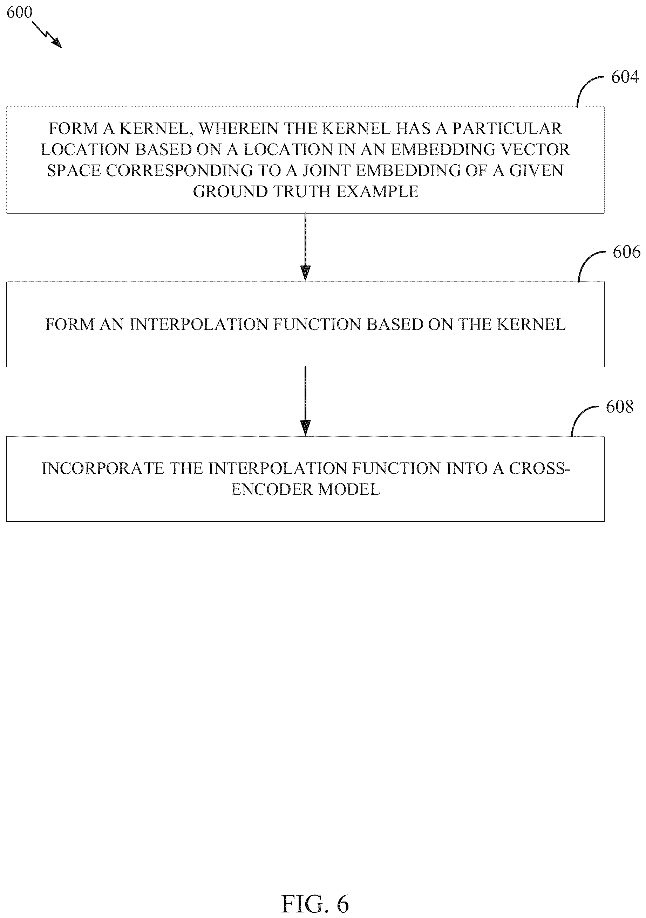

**FIG. 6** depicts additional example operations 600 related to automated content modality transformation. For example, operations 600 may be performed by one or more of the components described with respect to **FIG. 1****,** **FIG. 2****,** **FIG. 3****,** and **FIG. 4****.**

Operations 600 continue at step 604 with forming a kernel, wherein the kernel has a particular location based on a location in an embedding vector space corresponding to a given ground truth joint embedding. In certain embodiments, a size associated with the kernel is based on a scaling parameter learned through a supervised learning process.

Operations 600 continue at step 606 with forming an interpolation function based on the kernel. In some embodiments, based on the interpolation function, a level of augmentation of a similarity score for an input query-text pair increases as a distance in the embedding vector space between an embedding representation of the input query-text pair and the given ground truth joint embedding decreases. Some embodiments provide that, based on the interpolation function, a level of augmentation of a similarity score for an input query-text pair decreases as a distance in the embedding vector space between an embedding representation of the input query-text pair and the given ground truth joint embedding increases.

Operations 600 continue at step 608 with incorporating the interpolation function into a cross-encoder model.

### Example of a Processing System for Embedding-based Text Retrieval

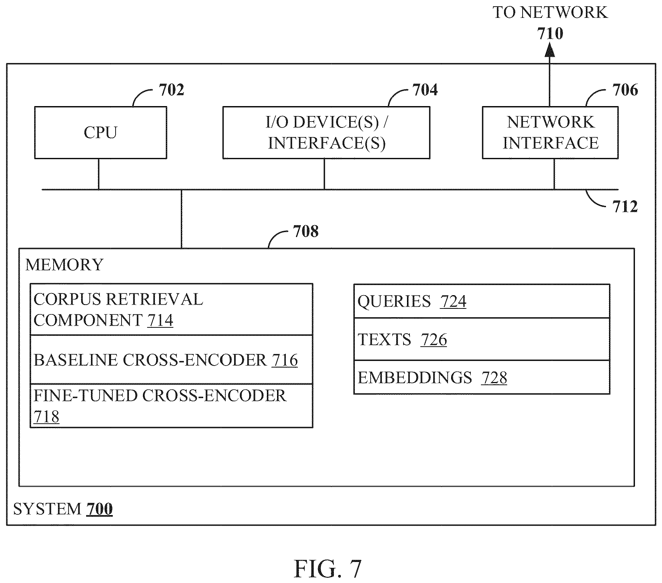

**FIG. 7** illustrates an example system 700 with which embodiments of the present disclosure may be implemented. For example, system 700 may be configured to perform operations 500 of **FIG. 5****,** operations 600 of **FIG. 6****,** and/or to implement one or more components as in **FIG. 1****,** **FIG. 2****,** **FIG. 3****,** and **FIG. 4****.**

System 700 includes a central processing unit (CPU) 702, one or more I/O device interfaces that may allow for the connection of various I/O devices 704 (e.g., keyboards, displays, mouse devices, pen input, etc.) to the system 700, network interface 706, a memory 708, and an interconnect 712. It is contemplated that one or more components of system 700 may be located remotely and accessed via a network 710. It is further contemplated that one or more components of system 700 may comprise physical components or virtualized components.

CPU 702 may retrieve and execute programming instructions stored in the memory 808. Similarly, the CPU 702 may retrieve and store application data residing in the memory 708. The interconnect 712 transmits programming instructions and application data, among the CPU 702, I/O device interface 704, network interface 706, and memory 708. CPU 702 is included to be representative of a single CPU, multiple CPUs, a single CPU having multiple processing cores, and other arrangements.

Additionally, the memory 708 is included to be representative of a random access memory or the like. In some embodiments, memory 708 may comprise a disk drive, solid state drive, or a collection of storage devices distributed across multiple storage systems. Although shown as a single unit, the memory 708 may be a combination of fixed and/or removable storage devices, such as fixed disc drives, removable memory cards or optical storage, network attached storage (NAS), or a storage area-network (SAN).

As shown, memory 708 includes corpus retrieval component 714, baseline cross-encoder 716, and fine-tuned cross-encoder 718. In some embodiments, corpus retrieval component 714 may be representative of corpus text retrieval component 105 of **FIG. 1** or **FIG. 2****.** Baseline cross-encoder 716 may be representative of baseline cross-encoder 135 of **FIG. 1****,** **FIG. 3****,** or **FIG. 4****.** Fine-tuned cross-encoder 718 may be fine-tuned cross-encoder 140 of **FIG. 1****,** **FIG. 3****,** or **FIG. 4****.**

Memory 708 further comprises queries 724, which may correspond to query 102 of **FIG. 1****,** query 402 of **FIG. 4****,** or training query 315 of **FIG. 3****.** Memory 708 further comprises texts 726, which may correspond to texts included in a corpus, texts identified by the text retrieval system, and/or the like. Memory 708 further comprises embeddings 728, which may correspond to embedding representations of texts and joint embedding representations of query-text pairs.

It is noted that in some embodiments, system 700 may interact with one or more external components, such as via network 710, in order to retrieve data and/or perform operations.

### Additional Considerations

The preceding description provides examples, and is not limiting of the scope, applicability, or embodiments set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

The preceding description is provided to enable any person skilled in the art to practice the various embodiments described herein. Various modifications to these embodiments will be readily apparent to those skilled in the art, and the generic principles defined herein may be applied to other embodiments. For example, changes may be made in the function and arrangement of elements discussed without departing from the scope of the disclosure. Various examples may omit, substitute, or add various procedures or components as appropriate. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and other operations. Also, "determining" may include receiving (e.g., receiving information), accessing (e.g., accessing data in a memory) and other operations. Also, "determining" may include resolving, selecting, choosing, establishing and other operations.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims. Further, the various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

A processing system may be implemented with a bus architecture. The bus may include any number of interconnecting buses and bridges depending on the specific application of the processing system and the overall design constraints. The bus may link together various circuits including a processor, machine-readable media, and input/output devices, among others. A user interface (e.g., keypad, display, mouse, joystick, etc.) may also be connected to the bus. The bus may also link various other circuits such as timing sources, peripherals, voltage regulators, power management circuits, and other types of circuits, which are well known in the art, and therefore, will not be described any further. The processor may be implemented with one or more general-purpose and/or special-purpose processors. Examples include microprocessors, microcontrollers, DSP processors, and other circuitry that can execute software. Those skilled in the art will recognize how best to implement the described functionality for the processing system depending on the particular application and the overall design constraints imposed on the overall system.

If implemented in software, the functions may be stored or transmitted over as one or more instructions or code on a computer-readable medium. Software shall be construed broadly to mean instructions, data, or any combination thereof, whether referred to as software, firmware, middleware, microcode, hardware description language, or otherwise. Computer-readable media include both computer storage media and communication media, such as any medium that facilitates transfer of a computer program from one place to another. The processor may be responsible for managing the bus and general processing, including the execution of software modules stored on the computer-readable storage media. A computer-readable storage medium may be coupled to a processor such that the processor can read information from, and write information to, the storage medium. In the alternative, the storage medium may be integral to the processor. By way of example, the computer-readable media may include a transmission line, a carrier wave modulated by data, and/or a computer readable storage medium with instructions stored thereon separate from the wireless node, all of which may be accessed by the processor through the bus interface. Alternatively, or in addition, the computer-readable media, or any portion thereof, may be integrated into the processor, such as the case may be with cache and/or general register files. Examples of machine-readable storage media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product.

A software module may comprise a single instruction, or many instructions, and may be distributed over several different code segments, among different programs, and across multiple storage media. The computer-readable media may comprise a number of software modules. The software modules include instructions that, when executed by an apparatus such as a processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module, it will be understood that such functionality is implemented by the processor when executing instructions from that software module.

The following claims are not intended to be limited to the embodiments shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more. No claim element is to be construed under the provisions of 35 U.S.C. §112(f) unless the element is expressly recited using the phrase "means for" or, in the case of a method claim, the element is recited using the phrase "step for." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

Further examples of feature combinations taught by the present disclosure are set out in the following numbered clauses:
1. A method for performing embedding-based text retrieval, comprising:
   retrieving, based on a query, a corpus comprising a set of texts;
   generating, for each respective query-text pair, a respective baseline joint embedding and a respective baseline similarity score based on providing each respective query-text pair as input to a baseline cross-encoder;
   generating, for each respective query-text pair, a respective augmented similarity score based on providing each respective baseline joint embedding and each respective baseline similarity score as input to a kernel interpolation cross-encoder model comprising a kernel function having a location in an embedding vector space that is associated with an embedding representation of a training example; and
   performing a text retrieval action based on the generating of the respective augmented similarity score for each respective query-text pair.
2. The method of clause 1, wherein the performing of the text retrieval action comprises selecting a given text of the set of texts based on the respective augmented similarity score for the respective query-text pair that includes the given text exceeding augmented similarity scores associated with other texts of the set of texts.
3. The method of clause 2, further comprising:
   providing an input to a language processing machine learning model based on the query and the given text; and
   receiving an output from the language processing machine learning model based on the input.
4. The method of any preceding clause, wherein, based on the kernel function, a level of augmentation of a similarity score for a particular query-text pair increases as a distance in the embedding vector space between an embedding representation of the particular query-text pair and the embedding representation of the training example decreases.
5. The method of any preceding clause, wherein, based on the kernel function, a level of augmentation of a similarity score for a particular query-text pair decreases as a distance in the embedding vector space between an embedding representation of the particular query-text pair and the embedding representation of the training example increases.
6. The method of any preceding clause, wherein a size associated with the kernel function is based on a scaling parameter learned through a supervised learning process.
7. The method of any preceding clause, wherein retrieving the corpus is based on generating an embedding representation of the query and using a semantic similarity algorithm to identify the corpus based on embedding representations of each of a given set of texts, wherein the given set of texts comprises a larger number of texts than a number of texts included in the corpus.
8. The method of any preceding clause, wherein the kernel interpolation cross-encoder model is configured to identify a given text as a match for a given query when a joint embedding representation of the given query and a particular text is within a threshold distance of a joint embedding representation of a particular query and the given text in the embedding vector space.
9. The method of any preceding clause, wherein the kernel interpolation cross-encoder model further comprises a kernel function for each of a plurality of training examples, wherein each kernel function has a respective location in an embedding vector space that is associated with an embedding representation of a respective training example of the plurality of training examples.
10. A method for building a cross-encoder model to perform embedding-based text retrieval, comprising:
   forming a kernel, wherein the kernel has a particular location based on a location in an embedding vector space corresponding to a joint embedding of a given ground truth example;
   forming an interpolation function based on the kernel; and
   incorporating the interpolation function into a cross-encoder model.
11. The method of clause 10, wherein, based on the interpolation function, a level of augmentation of a similarity score for an input query-text pair increases as a distance in the embedding vector space between an embedding representation of the input query-text pair and the joint embedding of a given ground truth example decreases.
12. The method of clause 10 or clause 11, wherein, based on the interpolation function, a level of augmentation of a similarity score for an input query-text pair decreases as a distance in the embedding vector space between an embedding representation of the input query-text pair and the joint embedding of a given ground truth example increases.
13. A system for performing embedding-based text retrieval, comprising:
   one or more processors; and
   a memory comprising instructions that, when executed by the one or more processors, cause the system to:
      retrieve, based on a query, a corpus comprising a set of texts;
      generate, for each respective query-text pair, a respective baseline joint embedding and a respective baseline similarity score based on providing each respective query-text pair as input to a baseline cross-encoder;
      generate, for each respective query-text pair, a respective augmented similarity score based on providing each respective baseline joint embedding and each respective baseline similarity score as input to a kernel interpolation cross-encoder model comprising a kernel function having a location in an embedding vector space that is associated with an embedding representation of a training example; and
      performing a text retrieval action based on the generating of the respective augmented similarity score for each respective query-text pair.
14. The system of clause 13, wherein the performing of the text retrieval action comprises selecting a given text of the set of texts based on the respective augmented similarity score for the respective query-text pair that includes the given text exceeding augmented similarity scores associated with other texts of the set of texts.
15. The system of clause 14, wherein the instructions further cause the system to:
   provide an input to a language processing machine learning model based on the query and the given text; and
   receive an output from the language processing machine learning model based on the input.
16. The system of any of clauses 13 to 15, wherein, based on the kernel function, a level of augmentation of a similarity score for a particular query-text pair increases as a distance in the embedding vector space between an embedding representation of the particular query-text pair and the embedding representation of the training example decreases.
17. The system of any of clauses 13 to 16, wherein, based on the kernel function, a level of augmentation of a similarity score for a particular query-text pair decreases as a distance in the embedding vector space between an embedding representation of the particular query-text pair and the embedding representation of the training example increases.
18. The system of any of clauses 13 to 17, wherein a size associated with the kernel function is based on a scaling parameter learned through a supervised learning process.
19. The system of any of clauses 13 to 18, wherein retrieving the corpus is based on generating an embedding representation of the query and using a semantic similarity algorithm to identify the corpus based on embedding representations of each of a given set of texts, wherein the given set of texts comprises a larger number of texts than a number of texts included in the corpus.
20. The system of any of clauses 13 to 19, wherein the kernel interpolation cross-encoder model is configured to identify a given text as a match for a given query when a joint embedding representation of the given query and a particular text is within a threshold distance of a joint embedding representation of a particular query and the given text in the embedding vector space.

## Claims

1. A method for performing embedding-based text retrieval, comprising:
retrieving, based on a query, a corpus comprising a set of texts;
generating, for each respective query-text pair, a respective baseline joint embedding and a respective baseline similarity score based on providing each respective query-text pair as input to a baseline cross-encoder;
generating, for each respective query-text pair, a respective augmented similarity score based on providing each respective baseline joint embedding and each respective baseline similarity score as input to a kernel interpolation cross-encoder model comprising a kernel function having a location in an embedding vector space that is associated with an embedding representation of a training example; and
performing a text retrieval action based on the generating of the respective augmented similarity score for each respective query-text pair.

2. The method of Claim 1, wherein the performing of the text retrieval action comprises selecting a given text of the set of texts based on the respective augmented similarity score for the respective query-text pair that includes the given text exceeding augmented similarity scores associated with other texts of the set of texts.

3. The method of Claim 2, further comprising:
providing an input to a language processing machine learning model based on the query and the given text; and
receiving an output from the language processing machine learning model based on the input.

4. The method of any preceding Claim, wherein, based on the kernel function, a level of augmentation of a similarity score for a particular query-text pair increases as a distance in the embedding vector space between an embedding representation of the particular query-text pair and the embedding representation of the training example decreases.

5. The method of any preceding Claim, wherein, based on the kernel function, a level of augmentation of a similarity score for a particular query-text pair decreases as a distance in the embedding vector space between an embedding representation of the particular query-text pair and the embedding representation of the training example increases.

6. The method of any preceding Claim, wherein a size associated with the kernel function is based on a scaling parameter learned through a supervised learning process.

7. The method of any preceding Claim, wherein retrieving the corpus is based on generating an embedding representation of the query and using a semantic similarity algorithm to identify the corpus based on embedding representations of each of a given set of texts, wherein the given set of texts comprises a larger number of texts than a number of texts included in the corpus.

8. The method of any preceding Claim, wherein the kernel interpolation cross-encoder model is configured to identify a given text as a match for a given query when a joint embedding representation of the given query and a particular text is within a threshold distance of a joint embedding representation of a particular query and the given text in the embedding vector space.

9. The method of any preceding Claim, wherein the kernel interpolation cross-encoder model further comprises a kernel function for each of a plurality of training examples, wherein each kernel function has a respective location in an embedding vector space that is associated with an embedding representation of a respective training example of the plurality of training examples.

10. A method for building a cross-encoder model to perform embedding-based text retrieval, comprising:
forming a kernel, wherein the kernel has a particular location based on a location in an embedding vector space corresponding to a joint embedding of a given ground truth example;
forming an interpolation function based on the kernel; and
incorporating the interpolation function into a cross-encoder model.

11. The method of Claim 10, wherein, based on the interpolation function, a level of augmentation of a similarity score for an input query-text pair increases as a distance in the embedding vector space between an embedding representation of the input query-text pair and the joint embedding of a given ground truth example decreases.

12. The method of Claim 10 or Claim 11, wherein, based on the interpolation function, a level of augmentation of a similarity score for an input query-text pair decreases as a distance in the embedding vector space between an embedding representation of the input query-text pair and the joint embedding of a given ground truth example increases.

13. A system for performing embedding-based text retrieval, comprising:
one or more processors; and
a memory comprising instructions that, when executed by the one or more processors, cause the system to:
retrieve, based on a query, a corpus comprising a set of texts;
generate, for each respective query-text pair, a respective baseline joint embedding and a respective baseline similarity score based on providing each respective query-text pair as input to a baseline cross-encoder;
generate, for each respective query-text pair, a respective augmented similarity score based on providing each respective baseline joint embedding and each respective baseline similarity score as input to a kernel interpolation cross-encoder model comprising a kernel function having a location in an embedding vector space that is associated with an embedding representation of a training example; and
performing a text retrieval action based on the generating of the respective augmented similarity score for each respective query-text pair.

14. The system of Claim 13, wherein the performing of the text retrieval action comprises selecting a given text of the set of texts based on the respective augmented similarity score for the respective query-text pair that includes the given text exceeding augmented similarity scores associated with other texts of the set of texts.

15. The system of Claim 14, wherein the instructions further cause the system to:
provide an input to a language processing machine learning model based on the query and the given text; and
receive an output from the language processing machine learning model based on the input.
